Europäisches Patentamt

European Patent Office

Office européen des brevets

(11) Numéro de publication: **0 041 912**
**A1**

## (12) DEMANDE DE BREVET EUROPEEN

(21) Numéro de dépôt: **81430015.8**

(22) Date de dépôt: **03.06.81**

(51) Int. Cl.³: **B 60 T 7/20**
**B 60 T 13/08**

(30) Priorité: **06.06.80 FR 8012818**

(43) Date de publication de la demande:
**16.12.81 Bulletin 81/50**

(84) Etats contractants désignés:
**BE DE GB IT NL**

(71) Demandeur: **Galibert, Etienne**
**2, Boulevard de la Pinède Vallon de la Rougière**
**F-13240 Septemes-Les-Vallons(FR)**

(72) Inventeur: **Galibert, Etienne**
**2, Boulevard de la Pinède Vallon de la Rougière**
**F-13240 Septemes-Les-Vallons(FR)**

(74) Mandataire: **Marek, Pierre**
**32, rue de la Loge**
**F-13002 Marseille(FR)**

(54) **Dispositif de neutralisation de la commande de freinage par inertie d'un véhicule remorqué.**

(57) Un électro-aimant (9) à noyau plongeur actionne une organe de calage destine à empêcher la libre coulissement de l'un des deux éléments tubulaires du timon télescopique (4,14) d'attelage, dans le second desdits éléments dans lequel est logé l'organe (15) de commande de freinage dudit véhicule remorqué.

Ledit organe de calage est constitué par butoir pivotant (6) assujetti au noyau plongeur dudit électro-aimant et destiné à venir en appui, en position de service, contre une butée fixe (13) installée, extérieurement, sur l'un desdits éléments du timon télescopique.

Fig.3

EP 0 041 912 A1

- 1 -

## Dispositif de neutralisation de la commande de freinage par inertie d'un véhicule remorqué.

La présente invention concerne un dispositif de neutralisation de la commande de freinage par inertie d'un véhicule remorqué tel que, par exemple, une caravane ou une remorque de camping attelée à un véhicule tracteur. Un tel dispositif a pour fonction de placer hors d'atteinte la commande de freinage par inertie du véhicule remorqué, afin que le véhicule tracteur puisse effectuer une marche arrière sans actionner le système de freinage dudit véhicule remorqué et sans que le conducteur dudit véhicule tracteur ait à descendre de voiture.

On a déjà proposé un dispositif de ce genre (Demande de Brevet français N° 75/05229) suivant lequel une bobine à induction à noyau plongeur est installée sous le tube extérieur du timon télescopique de l'attelage, en amont de la commande du système de freinage, de façon que, lorsque la bobine à induction est alimentée, le noyau plongeur vient se placer transversalement dans ledit tube extérieur et empêche la translation du tube intérieur actionnant la commande de freinage par inertie, lors du recul du véhicule tracteur. Une telle solution est cependant toute théorique, car le noyau plongeur est soumis à des forces latérales importantes qui ont pour effet de provoquer sa torsion et son excentration par rapport à la bobine à induction, de sorte que le système électro-magnétique ne se trouve plus en mesure de fonctionner.

Un but de la présente invention est donc de remédier à cet inconvénient rédhibitoire.

Cet objectif est atteint au moyen d'un dispositif comportant un butoir pivotant porté par une platine de montage et assujetti au noyau plongeur d'un électro-aimant, ledit butoir étant destiné, en position de service, à venir en appui contre une butée fixe installée, extérieurement, sur l'un des éléments du timon télescopique.

- 2 -

Un avantage du dispositif selon l'invention est que le noyau plongeur de l'électro-aimant ne subit, en cours de fonctionnement, aucune force latérale susceptible de provoquer sa déformation ou son excentration, l'effort étant uniquement supporté par les organes mécaniques robustes dudit dispositif.

Un autre avantage de ce dernier, est qu'il peut être aisément et économiquement installé sur tous timons télescopiques de caravanes ou remorques, y compris ceux déjà en service.

Ces buts, caractéristiques et avantages, et d'autres encore, ressortiront mieux de la description qui suit et des dessins annexés dans lesquels :

La figure 1 est une vue en plan du dispositif selon l'invention représenté en position de service permettant la marche arrière.

La figure 2 est une vue en plan analogue à la figure 1 et montrant le dispositif en position neutre.

La figure 3 est une vue de face, avec coupes partielles, dudit dispositif.

La figure 4 est une vue en coupe suivant la ligne 4 - 4 de la figure 1.

On se reporte auxdits dessins pour décrire un mode d'exécution avantageux, quoique nullement limitatif, du dispositif selon l'invention.

Ce dispositif comprend une platine 1 pourvue d'orifices 1a permettant son montage, au moyen de boulons 2, sur un gousset 3 solidaire, par soudure ou autrement, de l'un des éléments tubulaires 4 du timon télescopique. Les orifices de montage 1a ont, avantageusement, une forme oblongue ou arquée, de façon à autoriser un réglage du positionnement dudit dispositif, à l'extérieur du timon télescopique. La platine porte un pivot 5 lequel est, par exemple, fixé par vissage de son extrémité inférieure filetée, dans un taraudage ménagé dans l'épaisseur de ladite platine.

Sur ce pivot est monté, avec une aptitude de pivotement, un butoir orientable 6 constitué par une petite poutre dont l'une des extrémités est dotée d'un palier 6a permettant son montage autour dudit pivot.

Un manchon-entretoise 7 peut être monté sur le pivot 5 et intercalé entre un épaulement 5a dont est pourvu ce dernier, à sa base, et le palier du butoir, afin d'autoriser un réglage du niveau dudit butoir pivotant, dans le but de l'aligner parfaitement avec la butée installée sur le second élément du timon télescopique. Un étrier 8 est fixé, par exemple par vissage, d'une part, sur la platine 1, au moyen de deux pattes latérales 8a pourvues d'orifices pour le passage des vis de fixation et, d'autre part, sur le sommet taraudé du pivot 5.

L'orifice que présente chaque patte latérale 8a a, de manière intéressante, une forme oblongue, afin de permettre un réglage de la position de l'étrier 8 sur la platine de montage 1.

Sur l'étrier 8, est monté, de préférence par vissage, un électro-aimant 9 comportant un solénoïde 9a et un noyau plongeur 9b. L'extrémité libre de ce dernier est assujettie, par vissage ou autrement, à l'une des branches 10a d'une équerre d'entraînement 10 dont l'autre branche 10b est reliée, de manière articulée, au butoir pivotant. Dans ce but, ce dernier comporte une fente transversale 6b permettant le passage de la partie terminale libre de la branche 10b de l'équerre. La fente 6b a une longueur sensiblement plus importante que la largeur de la branche 10b de l'équerre, de façon à permettre les mouvements de pivotement du butoir. La branche 10b est assujettie au butoir au moyen d'un axe 11 traversant des orifices verticaux ménagés dans ladite branche et dans ledit butoir.

Un ressort de rappel 12 intercalé entre l'une des faces du carter 9c de l'électro-aimant et la face interne de la branche 10a de l'équerre d'entraînement, tend à repousser, en permanence, cette dernière vers l'extérieur et, par conséquent, à maintenir également le noyau plongeur 9b dudit électro-aimant en position "sortie". Lors de l'attelage de la caravane ou de la remorque à la voiture automobile, l'électro-aimant 9 est relié à un interrupteur monté sur le circuit électrique et placé sur le tableau de bord de ladite voiture, cet interrupteur permettant de commander le fonctionnement dudit électro-aimant.

Un couvercle (non représenté) est, de manière préférée, fixé, par vissage ou autrement, sur la face supérieure du carter 9c de l'électro-aimant, afin de protéger les organes de ce dernier contre les effets des intempéries.

Enfin, une butée extérieure 13 est installée fixement sur le second élément 14 du timon télescopique, cette butée étant, par exemple, constituée par une équerre double fixée par boulonnage sur ledit second élément, cette équerre double comportant une aile de verrouillage 13a orientée vers l'avant, c'est-à-dire en direction du butoir pivotant 6.

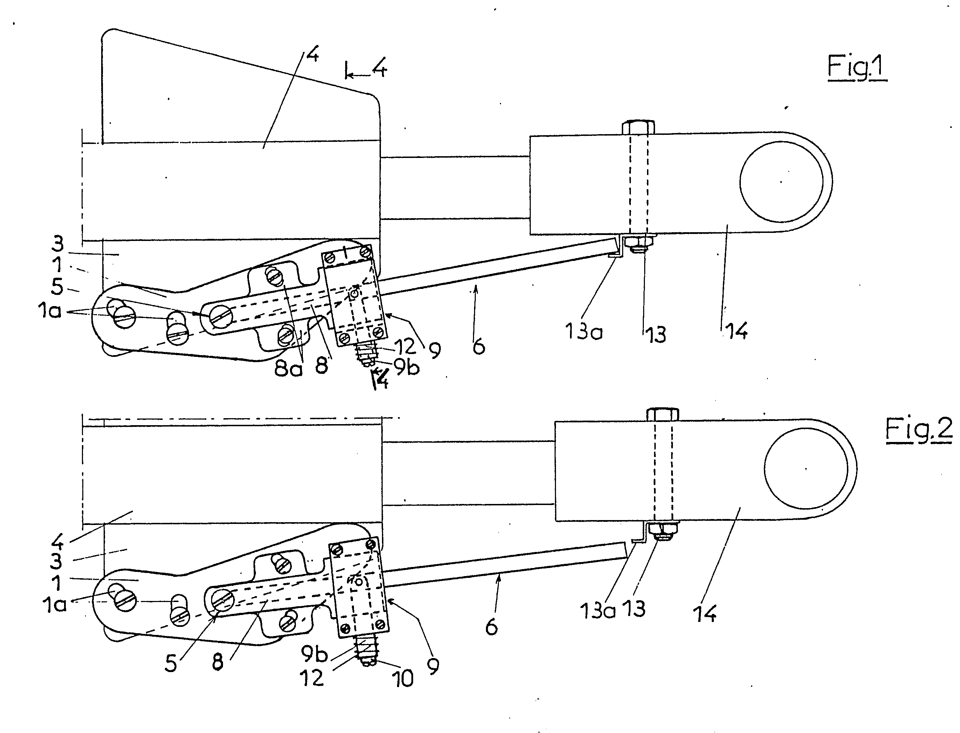

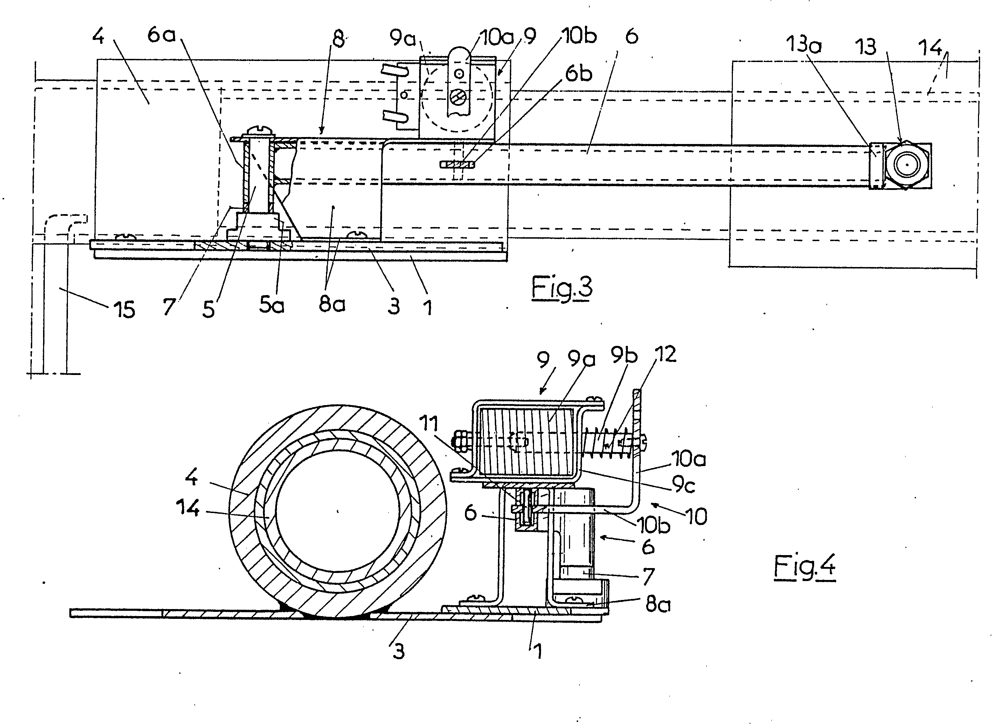

On conçoit bien le fonctionnement du dispositif selon l'invention. En situation inopérante (figure 2), le butoir 6 est maintenu en position de pivotement vers l'extérieur sous l'effet du ressort 12, de sorte que si la voiture vient à freiner, l'élément tubulaire 4 coulisse, librement, par inertie, sur l'élément tubulaire 14 dont l'extrémité peut ainsi actionner l'organe 15 (représenté schématiquement à la figure 3) de commande de freinage de la remorque logé dans ledit élément tubulaire 4.

Si le conducteur désire effectuer une marche arrière, il commande l'alimentation de l'électro-aimant, au moyen de l'interrupteur placé sur le tableau de bord de la voiture, ce qui a pour effet d'attirer le noyau plongeur 9b au centre des bobinages 9a de l'électro-aimant 9 et, par conséquent, de provoquer le pivotement du butoir 6 en direction du timon télescopique 4-14. Lors du recul de la voiture, le butoir solidaire de l'élément tubulaire 4, prend appui contre la butée 13 rigidement assujettie à l'élément tubulaire 14, de sorte que ce dernier ne peut atteindre et actionner l'organe 15 de commande du système de freinage de la remorque qui peut ainsi être entraînée en marche arrière. Dans cette position, l'extrémité du butoir 6 est verrouillée par l'aile libre 13a orientée vers l'avant de l'équerre double 13. Elle est libérée dès que le véhicule repart en marche avant.

On précise que le circuit de commande de l'électro-aimant 9 est branché sur le circuit d'alimentation des feux de recul du véhicule tracteur. Une diode de blocage insérée dans ledit circuit de commande interdit l'éclairage desdits feux de recul à l'aide de l'interrupteur lequel est, par exemple, constitué par un bouton poussoir.

- 1 -

Revendications de brevet

1. - Dispositif de neutralisation de la commande de freinage par inertie d'un véhicule remorqué tel qu'une caravane attelée à une voiture automobile, comprenant un électro-aimant (9) à noyau plongeur (9b) actionnant un organe de calage destiné à empêcher le libre coulissement de l'un des deux éléments tubulaires du timon télescopique (4-14) d'attelage, dans le second desdits éléments dans lequel est logé l'organe (15) de commande de freinage dudit véhicule remorqué, caractérisé en ce que ledit organe de calage est constitué par un butoir pivotant (6) assujetti au noyau plongeur dudit électro-aimant et destiné à venir en appui, en position de service, contre une butée fixe (13) installée, extérieurement, sur l'un desdits éléments du timon télescopique.

2. - Dispositif selon la revendication 1, caractérisé en ce que le butoir pivotant (6) est assujetti au noyau plongeur (9b) de l'électro-aimant (9) au moyen d'une équerre d'entraînement (10) dont l'une des branches (10b) est reliée, de manière articulée, audit butoir pivotant.

3. - Dispositif selon la revendication 2, caractérisé en ce que la branche (10b) de l'équerre reliée au butoir pivotant (6) est logée, dans sa partie terminale libre, dans une fente transversale (6b) ménagée dans ledit butoir, la longueur de cette fente étant sensiblement plus importante que la largeur de ladite branche de l'équerre.

4. - Dispositif selon l'une des revendications 2 ou 3, caractérisé en ce qu'un ressort de rappel (12) est interposé entre l'une des faces du carter (9c) de l'électro-aimant et la branche (10a) de l'équerre fixée au noyau plongeur (9b) dudit électro-aimant.

5. - Dispositif suivant la revendication 1, caractérisé en ce que le butoir pivotant (6) est porté par une platine (1) permettant l'installation dudit dispositif sur l'un des éléments du timon télescopique (4-14) et, par exemple, sur un gousset extérieur (3) solidaire de l'élément tubulaire (4) dans lequel est logé l'organe de commande (15) de freinage par inertie du véhicule remorqué.

6. - Dispositif suivant la revendication 5, caractérisé en ce que le butoir pivotant (6) est monté sur un pivot (5) porté par la platine de montage (1).

7. - Dispositif selon la revendication 6, caractérisé en ce qu'il comporte un manchon-entretoise (7) monté autour du pivot (5) et permettant de régler le niveau du butoir pivotant, afin de l'aligner parfaitement avec la butée (13).

8. - Dispositif suivant l'une des revendications 6 ou 7, caractérisé en ce que l'électro-aimant (9) est porté par un étrier (8) fixé, par exemple par vissage, d'une part, sur la platine de montage (1) et, d'autre part, sur le sommet du pivot (5).

9. - Dispositif selon l'une des revendications 1 ou 5, caractérisé en ce que la butée fixe extérieure (13) est constituée par une équerre double rigidement fixée sur l'élément tubulaire (14) du timon télescopique associé au second élément (4) sur lequel est installé le butoir pivotant (6), ladite équerre double comportant une aile de verrouillage (13a) orientée vers l'avant.

10. - Dispositif suivant l'une des revendications 5 ou 8, caractérisé en ce que les orifices de montage (1a) de la platine (1) et/ou les orifices de fixation de l'étrier (8) sur ladite platine, ont une forme oblongue.

Fig1

Fig2

Fig.3

Fig.4

0041912

0041912

**Office européen des brevets**

**RAPPORT DE RECHERCHE EUROPEENNE**

Numéro de la demande

EP 81 43 0015.8

## DOCUMENTS CONSIDERES COMME PERTINENTS

| Catégorie | Citation du document avec indication, en cas de besoin, des parties pertinentes | Revendica-tion concernée |
|---|---|---|
| | FR - A - 1 396 199 (PEKA-FAHRZEUGBAU)<br>* fig. 1 à 6 * | 1,2,<br>4-6,9 |
| | -- | |
| | DE - U - 6 942 647 (GLASEMACHER)<br>* revendication 1; fig. * | 1,2 |
| | -- | |
| D | FR - A1 - 2 301 421 (GUILLEMINOT) | |
| | ---- | |

### CLASSEMENT DE LA DEMANDE (Int. Cl.³)

B 60 T    7/20
B 60 T    13/08

### DOMAINES TECHNIQUES RECHERCHES (Int. Cl.³)

B 60 T    7/00
B 60 T    13/00

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X  Le présent rapport de recherche a été établi pour toutes les revendications

| Lieu de la recherche | Date d'achèvement de la recherche | Examinateur |
|---|---|---|
| Berlin | 26-08-1981 | LUDWIG |

EB Form 1503.1   06.78